(19) Europäisches Patentamt
European Patent Office
Office européen des brevets

(11) EP 2 335 920 B1

(12) **EUROPEAN PATENT SPECIFICATION**

(45) Date of publication and mention of the grant of the patent:
**05.03.2014 Bulletin 2014/10**

(21) Application number: **09815875.1**

(22) Date of filing: **18.09.2009**

(51) Int Cl.:
***B32B 27/04*** *(2006.01)* ***B32B 5/28*** *(2006.01)*
***D01F 6/62*** *(2006.01)* ***D03D 1/00*** *(2006.01)*
***D06M 17/00*** *(2006.01)*

(86) International application number:
**PCT/JP2009/004743**

(87) International publication number:
**WO 2010/035453 (01.04.2010 Gazette 2010/13)**

(54) **IMPACT-RESISTANT LAMINATED ARTICLE, PROCESS FOR PRODUCING THE SAME, AND IMPACT-RESISTANT MATERIAL**

SCHLAGFESTER LAMINIERTER GEGENSTAND, VERFAHREN ZU SEINER HERSTELLUNG UND SCHLAGFESTES MATERIAL

STRATIFIÉ MOULÉ RÉSISTANT AUX CHOCS, PROCÉDÉ DE FABRICATION ET MATÉRIAU RÉSISTANT AUX CHOCS

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.09.2008 JP 2008249713**

(43) Date of publication of application:
**22.06.2011 Bulletin 2011/25**

(73) Proprietor: **Kuraray Co., Ltd.**
**Okayama 710-0801 (JP)**

(72) Inventors:
- **INADA, Shinya**
**Okayama-shi**
**Okayama 702-8601 (JP)**
- **HITOMI, Yoshinori**
**Okayama-shi**
**Okayama 702-8601 (JP)**
- **KATAYAMA, Takashi**
**Kurashiki-shi**
**Okayama 713-8550 (JP)**

(74) Representative: **Vossius & Partner**
**Siebertstrasse 4**
**81675 München (DE)**

(56) References cited:
**WO-A1-91/01879** **JP-A- 1 031 835**
**JP-A- 61 279 518** **JP-A- 2007 161 907**
**JP-A- 2007 283 758** **US-A- 5 283 114**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 335 920 B1

**Description**

CROSS REFERENCE TO THE RELATED APPLICATIONS

This application is based on and claims priority to Japanese application No. 2008-249713, filed September 29, 2008.

FIELD OF THE INVENTION

The present invention relates to a laminated article excellent in impact resistance and, more particularly, to the laminated article capable of exhibiting an impact absorbing ability and suppressing scattering of a material particularly when subjected to a severe impact. The present invention also relates to a process for producing such laminated article and, yet, to an impact-resistant material utilizing such laminated article.

BACKGROUND ART

A high speed moving object such as, for example, an automotive vehicle, a railroad vehicle, or an aircraft, at the time of impact, exerts a kinetic energy originating from the velocity of movement thereof, accompanied by an immense force with which the object is destructed. Upon destruction of the object, the object is broken into pieces of debris, which are then scattered to result in enormous damages to objects and/or people present nearby the site of collision. For this reason, to reduce the scattering of the pieces of debris of the object so destroyed upon collision is considered as an important concern for security purpose.

In order to alleviate the foregoing problem, the Patent Document 1 listed below discloses a high functional composite effective to absorb an impact, brought about upon structural destruction, to minimize the scattering of a material. Specifically, this Patent Document 1 describes that when a soft composite, prepared from a woven fabric of aramid fibers and an ionomer polymer, is laminated with a hard composite, prepared from a plain weave fabric of carbon fibers and an epoxy polymer, without the both being bonded together, the result of the impact resistance test has revealed that although the part of the hard composite was punctured, the part of the soft composite was not torn and was not therefore scattered.

It has, however, been found that the high functional composite referred to above still has an insufficient impact resistance. Further, since the hard composite and the soft composite are laminated together in a non-bonded fashion or in a lightly bonded fashion to thereby increase the impact strength, the high functional composite lacks a practical utility.

WO 91/01879 A1 relates to a self-reinforced thermoplastic composite laminate comprising a thermoplastic matrix polymer and a plurality of long fibers of a liquid crystal polymer (LCP) which are formed *in situ* in the matrix polymer. This composite is formed by forming a prepreg as a plurality of individual sheets or layers each of which comprises long, essentially unidirectionally oriented fibers of said LCP in a thermoplastic polymer matrix. A lay-up is formed by cutting each individual sheet or layer into pieces so that the direction of fiber orientation in each such piece is either parallel to one pair of edges or at angles of 45 degrees to all of the edges. The lay-up is shaped under heat and pressure to form the composite.

US 5 283 114 A relates to self-reinforced polymer composites of about 98-2% by weight of a mixture of polystyrene and poly(phenylene oxide) and a about 2%-98% by weight of a melt processable wholly aromatic polymer which exhibit anisotropic properties in the melt phase. This wholly aromatic polymer is a liquid crystal polymer, or LCP. The composite contains predominantly unidirectionally oriented fibers primarily in the range of about 1 to 10 micrometers in diameter formed *in situ,* from the wholly aromatic polyester distributed in a polymer matrix of the mixture.

JP 1 031 835 A relates to a fiber-reinforced polymer molded article produced by reinforcing (A) a polymer molded article with (B) an organic fiber having a tensile modulus of ≥ $4t/mm^2$ for reinforcing the outer layer of the article and (C) an inorganic fiber having a tensile modulus of ≥ $6t/mm^2$ for reinforcing the inner layer of the article. Preferably, the component B is wholly aromatic polyester fiber, especially a fiber exhibiting liquid crystal nature in molten state, the component C is glass fiber and the component A is a thermosetting polymer.

JP 2007 161907 A relates to fiber-reinforced thermosetting resin containing polyacrylate fibers comprising a thermotropic liquid crystalline polymer and having a tensile strength of ≥ 15 cN/dtex and a tensile initial elastic modulus of ≥ 400 cN/dtex in an amount of 0.1 to 50 parts by mass per 100 parts by mass of the thermoplastic resin.

JP 61 279518 A relates to a continuous production unit of reinforced resin sheet by using a laminate (B) comprising a reinforcing material (a) and a thermoplastic resin (b) wherein a glass fiber mat forms the reinforcing material (a) and a polypropylene forms the thermoplastic resin (b).

PATENT DOCUMENT

[Patent Document 1] JP Laid-open Patent Publication No. 2007-283758 (Claims, paragraph [0024] to [0036])

DISCLOSURE OF THE INVENTION

In view of the foregoing, the present invention has for its object to provide an impact resistant laminated article having a high impact resistance and being excellent in suppressing scattering of pieces of debris upon destruction.

Another object of the present invention is to provide the impact resistant laminated article, which is not only excellent in integrity but also capable of being reduced in weight.

A further object of the present invention is to provide a process for producing the impact resistant laminated article of the kind referred above efficiently.

As a result of intensive studies conducted by the inventors of the present invention on an impact resistant article, it has been finally found that if a layer of a specific soft composite material, which comprises a fabric made of a thermotropic liquid crystal polymer (LCP) fiber as soft reinforcing fiber and a polymer applied thereto, is unified with a layer of a specific hard composite material, which comprises a thermosetting polymer and a hard reinforcing fiber, to prepare a laminated article, the laminated article has an improved impact resistance, and that such laminated article exhibits a high impact resistance with superior unity between the soft composite material and the hard composite material. Those findings have now led to the present invention.

That is, the present invention provides a laminated article comprising a layer of a hard composite material, the hard composite material comprising at least a hard reinforcing fiber and a thermosetting polymer used as matrix of the hard composite material; a layer of a soft composite material, the soft composite material comprising at least a soft reinforcing fiber and a thermoplastic polymer used as matrix of the soft composite material, the soft composite layer being laminated to the hard composite layer so as to be unified with each other; wherein the soft reinforcing fiber comprises at least a thermotropic LCP fiber; and the soft composite material comprises a fabric made of the soft reinforcing fiber. Such laminated article achieves a superior impact resistance.

In the laminated article, the thermotropic LCP fiber may be provided as multifilament yarn, for example, a multifilament yarn having a single fiber fineness of about 1 to 15 dtex and a total fineness of about 100 to 3,000 dtex.

The fabric made of the soft reinforcing fiber may be a fabric selected from the group consisting of a unidirectional fabric of a thermotropic LCP fiber, a bi-directional fabric thereof, a triaxial fabric thereof, and a multiaxial fabric thereof. A sheet of the fabric made of the soft reinforcing fiber may have a basis weight of about 40 to 300 g/m$^2$, and a thickness of about 0.05 to 2 mm.

The present invention also includes an impact-resistant material prepared with the laminated article described above.

The present invention also includes a process for producing an impact-resistant laminated article, comprising the steps of:

preparing a fabric, a part or all of which is formed from a soft reinforcing fiber comprising at least a thermotropic LCP fiber;
forming a soft composite material comprising the fabric made of the soft reinforcing fiber and a thermoplastic polymer by impregnating or soaking the fabric with the polymer or by laminating the fabric with the polymer; and
bonding or laminating the soft composite material with a hard composite material comprising at least a thermosetting polymer and a hard reinforcing fiber to obtain the laminated article.

In the process, the polymer to be combined with the soft reinforcing fiber may comprise a thermoplastic polymer formed into a sheet or fabric structure. Further, the step of forming the soft composite material may comprise steps of:

overlaying a fabric made of the soft reinforcing fiber alternating with a sheet or fabric of the thermoplastic polymer to give an overlaid assembly comprising one or more fabric of the soft reinforcing fiber and one or more sheet or fabric of the thermoplastic polymer, in which an outermost layer of the overlaid assembly is thermoplastic polymer sheets or fabrics; and
treating the overlaid assembly by heating under a pressure.

It should be noted that the term "filament" means a continuous fiber and is distinguished from the term "staple" that is a short fiber having a finite length.

EFFECT OF THE INVENTION

According to an embodiment, the present invention makes it possible to provide a laminated article improved in impact resistance and capable of suppressing a material scattering by enhancing a shatter resistance of an object comprising the laminated article even when subjected to a severe impact. The improved impact resistance of the laminated article is achieved (i) by forming a soft composite material which comprises a polymer and a fabric made of a soft reinforcing fiber comprising a thermotropic LCP fiber and (ii) by laminating the soft composite material with a hard composite material.

Further, since the laminated article of embodiments of the present invention achieves not only superior impact resistance but also excellent unity between the hard composite material and the soft composite material, the laminated article itself has an enhanced durability.

DETAILED DESCRIPTION OF THE INVENTION

An embodiment of the present invention relates to an impact-resistant laminated article comprising one or more layer of a hard composite material (i.e., a composite material containing hard reinforcing fibers) and one or more layer of a soft composite material (i.e., a composite material containing soft reinforcing fibers) to be laminated to the hard composite layer so as to be unified with each other.

[Hard composite material]

The hard composite material comprises at least a hard reinforcing fiber and a thermosetting polymer used as matrix of the hard composite material, and may comprise, if desired, curing agents, curing accelerators, and curing catalysts for the thermosetting polymer. Further, the hard composite material may comprise, if desired, compatibilizers; fillers; colorants such as dyes and pigments; antioxidants; ultraviolet absorptive agents; light stabilizers; and other various additives.

(Thermosetting polymer)

Examples of thermosetting polymers include epoxy polymers (e.g., bisphenol A type, novolak type, brominated type, and alicyclic type epoxy polymers), vinyl ester series polymers (e.g., bisphenol A type, novolak type, and brominated type vinyl ester polymers), unsaturated polyester polymers, crosslinkable methacrylic polymers, phenolic polymers (novolak type and resol type phenolic polymers), urea polymers, melamine polymers, diallyl phthalate polymers, furan polymers, silicone series polymers, and the like. These polymers can be used singly or in combination. Among these thermosetting polymers, preferable thermosetting polymers include epoxy polymers, vinyl ester polymers, and unsaturated polyester polymers.

(Hard reinforcing fiber)

Examples of hard reinforcing fibers include carbon fibers, glass fibers, and the like. Preferably, the hard reinforcing fiber includes carbon fibers in order to provide high strength. The hard reinforcing fiber may comprise, if desired, synthetic fibers, semisynthetic fibers, and others in combination with the hard reinforcing fiber as mentioned in the item of the soft reinforcing fiber described therebelow.

The hard reinforcing fiber may be any of continuous fibers or short fibers depending on types of molding process to produce a thermosetting polymer product. The hard reinforcing fiber may be dispersed, for example as chopped strands, in a thermosetting polymer by directly mixing the hard reinforcing fibers with the thermosetting polymer. The hard reinforcing fiber may be used for preparing a fabric-like material such as a woven fabric, a knitted fabric, a nonwoven fabric, or a stitch sheet (e.g., a non-crimped fabric). Thereafter, the fabric-like material is impregnated or soaked with a thermosetting polymer in a liquid state. It should be noted that the hard composite material may be formed from one or more fabrics made of hard reinforcing fibers. Where a plurality of hard-reinforcing-fiber fabrics are used in the hard composite material, the shape of the fabrics may be identical or may be different from each other.

From the view point of improving strength or modulus, the hard composite material preferably comprises a woven or knitted fabric made of a hard reinforcing fiber and a thermosetting polymer applied thereto. In general, where the woven or knitted fabric is formed from hard reinforcing fibers, the hard reinforcing fiber may be any of filament yarns (e.g., monofilament yarns, multifilament yarns) and spun yarns. Among them, preferable one includes multifilament yarns in order to enhance impact resistance.

The hard reinforcing fibers may have a single fiber fineness of about 0.1 to 600 dtex, preferably about 0.25 to 500 dtex, and/or may have a total fineness of about 100 to 5,000 dtex, preferably about 500 to 3,000 dtex.

The structure of a woven or knitted fabric or stitch sheet comprising hard reinforcing fiber as weaving or knitting yarns or fiber bundles may be any of unidirectional fabrics of hard reinforcing fiber, bi-directional fabrics thereof, triaxial fabrics thereof, multiaxial fabrics thereof, non-crimped fabrics thereof, and others. Among them, the preferable one includes unidirectional fabrics, bi-directional fabrics and non-crimped fabrics in order to satisfy both light weight and impact resistance of the laminated article.

For example, unidirectional fabric and bi-directional fabric may have a weaving density, as represented by a warp and/or weft density, of about 8 to 50 yarns per 2.5 cm, or 10 to 45 yarns per 2.5 cm.

A sheet of fabric (e.g., a woven or knitted fabric, stitch sheet) made of hard reinforcing fibers may have, for example, a basis weight of about 50 to 500 $g/m^2$ and preferably about 100 to 400 $g/m^2$. Further, a sheet of the fabric may have, for example, a thickness of about 0.05 to 2 mm, preferably about 0.1 to 1.5 mm.

In the hard composite material, the amount of hard reinforcing fiber to be used may be, based on 100 parts by weight of thermosetting polymer, selected from the wide range of about 30 to 300 parts by weight, and preferably about 50 to 200 parts by weight depending on the configuration of the hard reinforcing fiber.

Examples of production processes of hard composite materials include hand lay-up applications, spray-up applications, SMC, BMC, RTM, pressure moldings, and others. Among them, preferable process includes SMC or RTM, in which one or more base materials formed from hard reinforcing fibers are impregnated with a thermosetting polymer.

[Soft composite material]

The soft composite material comprises at least a polymer (e.g., thermoplastic polymers or thermosetting polymers) used as matrix of the soft composite material, and a soft reinforcing fiber. The soft reinforcing fiber comprises at least a thermotropic LCP fiber, and the soft composite material comprises a fabric made of the soft reinforcing fiber. The soft composite material may include a variety of additives described in the item of the hard composite material.

(Polymer)

In the soft composite material, use of thermotropic LCP fibers as soft reinforcing fiber enables a variety of combinations of polymers with the soft reinforcing fiber. Accordingly, the polymer to be combined with the soft reinforcing fiber may be any of thermosetting polymers and thermoplastic polymers. The thermosetting polymers are ones described in the item of the hard composite material.

Examples of thermoplastic polymers include olefinic polymers (e.g., polyethylenes, polypropylenes, ethylene vinyl acetate copolymers, etc.); polyester series polymers (e.g., polyethylene terephthalates, polybutylene terephthalates, polyethylene naphthalates, polybutylene naphthalates, etc.); polyamide series polymers (e.g., aliphatic polyamides such as polyamide 6 and polyamide 66, alicyclic polyamides, an aromatic polyamides, etc.); styrene series polymers (e.g., polystyrenes etc.); (meth)acrylic polymers; polyether series polymers; polycarbonate series polymers; ionomer polymers (e.g., olefinic ionomers, fluoric ionomers, etc.); thermoplastic elastomers (styrene series thermoplastic elastomers, urethane series thermoplastic elastomers, olefinic thermoplastic elastomers, vinyl chloride series thermoplastic elastomers, polyester series thermoplastic elastomers, polyamide series thermoplastic elastomers, etc.) and others. These thermoplastic polymers can be used singly or in combination.

Among them, in view of excellence in integrity with soft reinforcing fibers comprising thermotropic liquid crystal polymer, preferable one includes thermoplastic elastomers, polyester series polymers, polyamide series polymers, ionomers and the like.

Examples of styrene series thermoplastic elastomers include SEP (styrene/ethylene/propylene block copolymer), SEPS (styrene/ethylene/propylene/styrene block copolymer), SEEPS (styrene/ethylene/ethylene/propylene/styrene block copolymer), SBS (styrene/butadiene/styrene block copolymer), SEBS (styrene/ethylene/butadiene/styrene block copolymer), SIS (styrene/isoprene/styrene block copolymer), and others. Among these styrene series thermoplastic elastomers, preferable one includes SEP, SEPS, SEEPS, SEBS, and the like.

The olefinic thermoplastic elastomer comprises a polyethylene or a polypropylene as a hard segment and SEBS or an ethylene/propylene copolymer as a soft segment.

The urethane series thermoplastic elastomer comprises a hard segment comprising a low molecular weight glycol and a diisocyanate, and a soft segment comprising a high molecular weight diol and a diisocyanate.

The low molecular weight glycol includes, for example, C1-10 diols such as ethylene glycol, 1,4-butane diol and 1,6-hexane diol, whereas the high molecular weight diol includes, for example, poly(1,4-butylene adipate), poly(1,6-hexane adipate), polycaprolactone, polyethylene glycol, polypropylene glycol and polyoxytetramethylene glycol. The diisocyanate referred to above includes, for example, tolylene diisocyanate, 4,4-diphenylmethane diisocyanate, hexamethylene diisocyanate, isophorone diisocyanate, and others.

Among these thermoplastic polymers, in view of high impact resistance and excellence in integrity with thermotropic LCP filaments (in particular, wholly aromatic polyester filaments), preferable one includes styrene series thermoplastic elastomers.

Further, as a thermosetting polymer employed in combination with a soft reinforcing fiber, preferable one includes epoxy polymers, vinyl ester polymers, and unsaturated polyester polymers among a variety of thermosetting polymers described in the item of thermosetting polymer. Preferably, the type of thermosetting polymer used as matrix of soft composite material is the same type with the thermosetting polymer used as matrix of hard composite material.

(Soft reinforcing fiber)

In the present invention, a soft reinforcing fiber used in combination with a polymer comprises at least a thermotropic liquid crystal polymer (LCP) fiber.

The thermotropic LCP fiber is formed from a thermotropic liquid crystal polymer. Examples of thermotropic liquid crystal polymers may include any of thermotropic liquid crystal polyesters and thermotropic liquid crystal polyester amides. Among them, preferable one includes thermotropic liquid crystal polyesters, in particular wholly aromatic polyesters.

The wholly aromatic polyester fibers are made of a polyarylate-series polymer capable of forming an optically anisotropic melt phase. The polymer is obtainable by polymerization of an aromatic diol, an aromatic dicarboxylic acid, an aromatic hydroxycarboxylic acid, and others. Examples of polymers may include a combination of repeating units as indicated by the following (1) to (11).

(1) 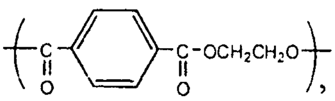, 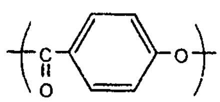

(2) 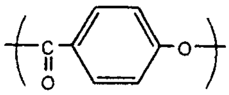, 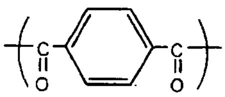, 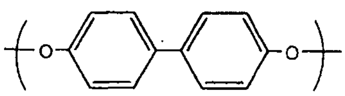

(3) 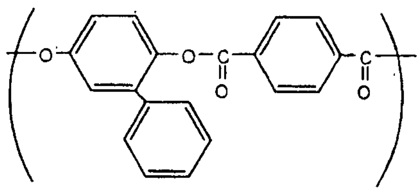

(4) 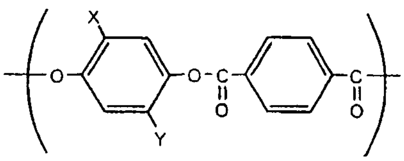, 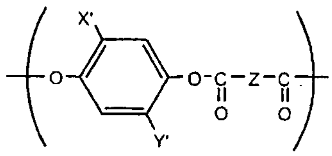

Wherein each of the X, X', Y and Y groups independently represents H, Cl, Br or $CH_3$;
Z represents

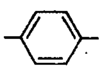, 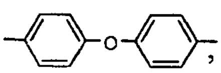, 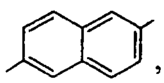,

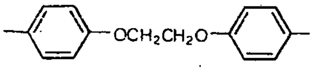, or 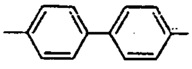.

(5) 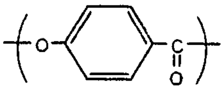, 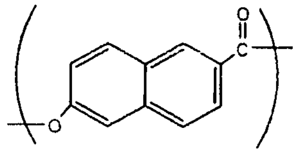

(6) 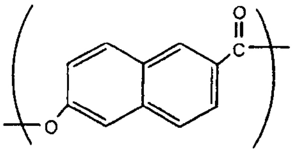, 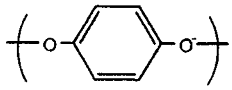, 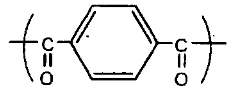

(7) 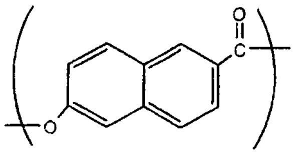, 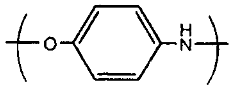, 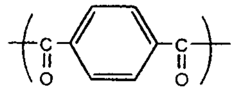

(8) 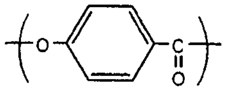, 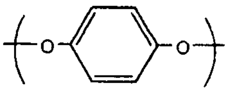, 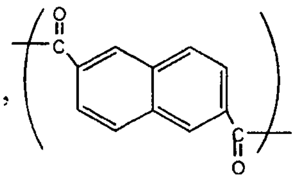, 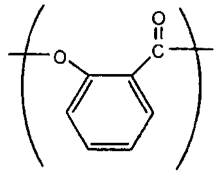

(9) 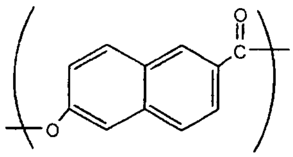, 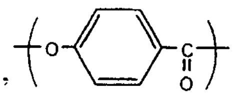, 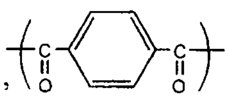, 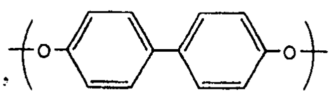

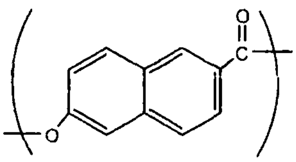, 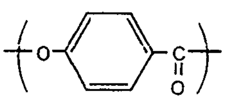, 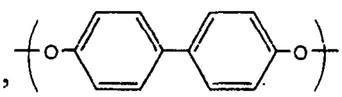

(10)

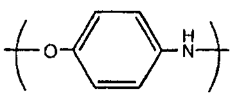, 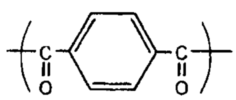

(11) 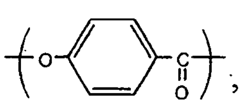, 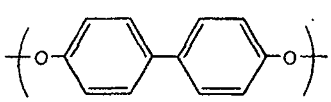, 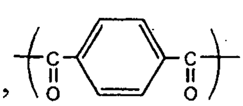, 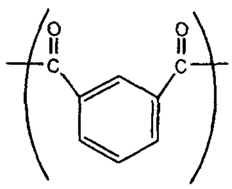

In particular, the preferable one includes a wholly aromatic polyester comprising the combination of the following repeating units of (A) and (B) in a proportion of not lower than 80 mol% in total. Among them, a wholly aromatic polyester comprising the repeating unit (B) in a proportion of 3 to 45 mol% is particularly preferred.

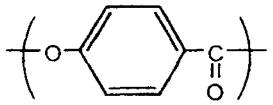 ............... (A)

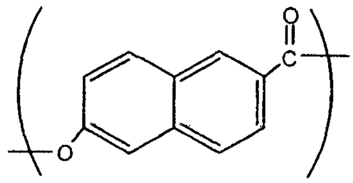 ............... (B)

The phrase "a polymer capable of forming an optically anisotropic melt phase" herein means that the polymer shows an optically anisotropic property in a melt phase. This property can be recognized, for example, by observing a transmitted light from a sample that is placed on a heating stage and heated at an elevated temperature under nitrogen atmosphere

The wholly aromatic polyester filaments preferably comprise a polyarylate-series polymer capable of forming an optically anisotropic melt phase having a melting point (hereinafter referred to as Mp) preferably within the range of between 260°C and 360°C and, more preferably within the range of between 270°C and 350°C. It should be noted that Mp can be determined by measuring a temperature at which a largest endothermic peak of the polymer appears with the use of a differential scanning calorimeter (Mettler DSC).

The polyarylate-series polymer capable of forming an optically anisotropic melt phase may contain thermoplastic polymers such as polyethylene terephthalates, modified polyethylene terephthalates, polyolefins, polycarbonates, polyarylates, polyamides, polyphenylene sulfides, polyester ether ketones, and fluororesins, within the range of not deteriorating the effect of the present invention.

The shape of fabrics made of soft reinforcing fibers including thermotropic LCP fibers may be a variety of shapes of woven or knitted fabrics, non-woven fabrics, stitch sheets (e.g., non-crimped fabrics) and others. In order to enhance an impact resistance of a laminated article, preferable fabric shapes include woven or knitted fabrics or stitch sheets both of which comprise soft reinforcing fiber as weaving or knitting yarns or fiber bundles.

Where soft reinforcing fibers are used as weaving or knitting yarns or fiber bundles, in general, the weaving or knitting yarns or fiber bundles may be any of filament yarns (monofilament yarns, multifilament yarns) and spun yarns. In order to suppress scattering of a material, soft reinforcing fibers are preferably used as filament yarns.

Then the concept of a spinning using the polymer capable of anisotropic melt (melt-anisotropic polymer) is now described. When the melt-anisotropic polymer is extruded through a spinneret at a shear rate of $10^3$ to $10^5$ $sec^{-1}$, extremely high molecular orientation is induced in the melt-anisotropic polymer. As a result, such filaments after spinning have a tenacity of not lower than 8 cN/dtex and a modulus of not lower than 400 cN/dtex even if the filaments are not subjected to drawing that is conventionally necessary for ordinary as-spun yarns made of polyethylene terephthalate or others. When circular spinnerets are employed, the shear rate ($\gamma$), as referred to in this invention, is calculated from the following formula:

$$\gamma = 4Q / \pi r^3 \ (sec^{-1})$$

wherein "r" is a radius of spinneret hole (cm), and "Q" is the rate of extrusion of the polymer per hole ($cm^3$/sec)

The tenacity and/or modulus of the as-spun yarns can be increased by heat treatment. The heat treatment is preferably performed at a temperature of (Mp - 80) °C to Mp °C. Since the melting point of the wholly aromatic polyester filaments employed in the present invention gradually increases with increasing the temperature of the heat treatment, the heating temperature may be preferably elevated in stages. The suitable atmosphere in the heat treatment may be inert gas such as nitrogen or argon, active gas such as oxygen, or combination of these gases. Moreover, the heat treatment may be performed under a reduced pressure.

Such wholly aromatic polyester filaments are available, for example, under the registered trade name "VECTRAN" from Kuraray Co., Ltd.

The tenacity of the liquid crystal polymer filament may be, for example, preferably about 10 to 100 cN/dtex, more preferably about 20 to 80 cN/dtex. The modulus of the liquid crystal polymer filament may be, for example, preferably about 500 to 2,000 cN/dtex, more preferably about 700 to 1,500 cN/dtex.

The weaving or knitting yarn(s) comprising filament yarn(s) may be a monofilament yarn having a single fiber fineness of about 500 to 5,000 dtex. In order to satisfy both light weight and impact resistance of the laminated article,

the weaving or knitting yarn may be preferably a multifilament yarn having a single fiber fineness of about 1 to 15 dtex and a total fineness of about 1,000 to 3,000 dtex.

Further, the liquid crystal polymer filament may comprise, if desired, inorganic substances, such as titanium oxide, kaolin, silica, and barium oxide; colorants such as carbon black, dyes and pigments; antioxidants; ultraviolet absorptive agents; light stabilizers; and other various additives.

The soft reinforcing fiber may comprise only thermotropic LCP filaments, but if desired, may comprise synthetic fibers, semisynthetic fibers (cellulose series fibers etc.), and others, in combination with the thermotropic LCP filaments to form a composite yarn. Further, as in the case of a unidirectional fabric described below, a part of weaving or knitting yarn constituting the woven or knitted fabric may be formed from a yarn including a thermotropic LCP filament, and other part of the weaving or knitting yarn may be formed from a yarn without a thermotropic LCP filament.

Examples of synthetic fibers include polyolefinic fibers (polyethylene fibers, polypropylene fibers, etc.), polyamide series fibers, polyvinyl chloride fibers, polyvinylidene chloride series fibers, polyester series fibers, acrylic fibers, polyurethane series fibers, and others. These fibers may be used singly or in combination. Among them, preferable one includes polyolefinic fibers, polyamide series fibers, and polyester series fibers.

Where the soft reinforcing fiber may be a composite yarn made of a thermotropic LCP filament in combination with other filament(s), the structure of the composite yarn may be any of uniform structures, multi-segmented structures (or structure comprising a plurality of groups), two layered structures, and three layered structures.

As woven or knitted fabrics or stitch sheets comprising a soft reinforcing fiber as weaving or knitting yarns or fiber bundles, there may be exemplified unidirectional fabrics comprising thermotropic LCP filament yarns as either warp or weft; bi-directional fabrics comprising thermotropic LCP filament yarns as both warp and weft; triaxial fabrics comprising thermotropic LCP filament yarns in three directions such as warp, weft and obliquely-crossed directions; multiaxial fabrics comprising thermotropic LCP filament yarns in multiple direction of four or more directions; knitted fabrics (warp knitted fabrics, weft knitted fabrics, etc.) comprising thermotropic LCP filament yarns as knitting yarns; unidirectional non-crimped fabrics comprising thermotropic LCP filament yarns as fiber bundles placed in parallel with each other, and other yarns as stitching yarns; multidirectional non-crimped fabrics in which layers of straight fiber bundles comprising thermotropic LCP filament yarns oriented in different directions (e.g., two directions) stitched together with stitching yarns; and others. Among these fabrics, in order to satisfy reduction in weight and impact resistance of the laminated article, preferable one includes unidirectional fabrics, bi-directional fabrics, unidirectional non-crimped fabrics, and bi-directional non-crimped fabrics. It should be noted that a soft composite material may comprise one or more fabrics made of soft reinforcing fibers. Where a plurality of fabrics made of soft reinforcing fibers are used, the shape of the fabrics may be same or different.

For example, unidirectional fabric and bi-directional fabric may have a weaving density, as represented by a warp and/or weft density, of about 8 to 50 yarns per 2.5 cm, or 10 to 45 yarns per 2.5 cm.

A sheet of fabric made of soft reinforcing fiber may have, for example, a basis weight of about 40 to 300 g/m$^2$ and preferably about 100 to 200 g/m$^2$ in order to satisfy both light weight and impact resistance of the laminated article. Further, a sheet of the fabric may have, for example, a thickness of about 0.05 to 2 mm, preferably about 0.1 to 1.5 mm.

A fabric made of soft reinforcing fiber may be combined with a polymer to produce a soft composite material (i) by impregnating or soaking the fabric with a molten or dissolved thermoplastic polymer or thermosetting pre-polymer, (ii) by overlaying the fabric with a sheet or fabric of thermoplastic polymer and heating the overlaid product; or (iii) by impregnating the fabric with an emulsion of a thermoplastic polymer or thermosetting pre-polymer, drying the impregnated product to give a prepreg, and laminating the prepreg under heating. In order to simplify the production process of a soft composite material, a process using a sheet or fabric of thermoplastic polymer is preferred.

In the soft composite material, the amount of thermotropic LCP fiber to be used may be, based on 100 parts by weight of polymer, selected from the wide range of about 50 to 500 parts by weight, and preferably about 100 to 450 parts by weight depending on the configuration of the woven or knitted fabric.

[Laminated article]

According to the production process of an impact resistance laminated article in the present invention, the hard composite material and the soft composite material are laminated and unified. Method for unification is not limited to a specific one as long as the hard composite material and the soft composite material are strongly unified. All required in the laminated article is that one or more layers of the hard composite material are bonded in planar to one or more layers of the soft composite material, and examples of bonding method include (i) a method of disposing an adhesive layer (e.g., by applying an adhesive agent) between a hard composite material layer and a soft composite material layer to bond both layers, (ii) a method of heating a part of the thermoplastic polymer constituting a soft composite material layer to be molten or soften, and placing the molten or soften part of the thermoplastic polymer on a hard composite material to bond both materials, and other known or custom methods.

Examples of adhesives include thermoplastic resin based adhesives (for example, vinyl acetate based adhesives, polyvinyl alcohol based adhesives, polyvinyl acetal based adhesives, polyvinyl chloride based adhesives, acrylic adhesives, polyamide based adhesives, cellulose based adhesive, etc.), thermosetting polymer based adhesives (for example, urea resin based adhesives, melamine based adhesives, phenol based adhesives, epoxy based adhesives, polyester based adhesives, polyurethane based adhesives, etc.), rubber or elastomer based adhesives (chloroprene based adhesives, nitrile based adhesives, styrene based adhesives, butyl rubber based adhesives, polysulfide based adhesives, silicone based adhesives, etc.), and others. These adhesives can be used singly or in combination. Among these adhesives, from a viewpoint from which firm adhesion is obtained between a hard composite material and a soft composite material, preferable one includes thermosetting polymer based adhesives (especially epoxy based adhesives, polyurethane based adhesives, etc.).

Since the hard composite material is unified to the soft composite material so as to satisfy a practical use, the laminated article may have a peeling strength (measured in accordance with JIS K 6848) for separating the hard composite material from the soft composite material of about 10 to 200 N/25 mm, preferably about 15 to 180 N/25 mm.

According to embodiments of the present invention, the impact resistant laminated article achieves high impact resistance even in the light weight. The laminated article may have, for example, a basis weight of about 2,000 to 4,500 g/$m^2$ and preferably about 2,500 to 4,000 g/$m^2$. Further, the impact resistant laminated article may have a thickness of about 0.5 to 5 mm, preferably about 1 to 4 mm.

The lamination structure of the impact resistant laminated article is not limited to a specific one as long as the laminated article comprises both hard composite material (H) and soft composite material (S). The lamination structure of the article may be, for example, (S)/ (H), (S)/ (H)/(S), and others.

Further, the total structure of the laminated article is not limited to a specific one as long as the article has the lamination array, and may include two dimensional or three dimensional shapes.

Furthermore, the impact-resistant material of the present invention comprises at least an impact resistant laminated article because the material is formed from the impact resistant laminated article. The impact-resistant material may comprise only an impact resistant laminated article, or may comprise an impact resistant laminated article and a counterpart material combined therewith. Examples of such impact-resistant materials include impact resistant plates; impact resistant wall panels; helmets, bulletproof clothings, and others.

## EXAMPLES

Hereinafter, the present invention will be demonstrated by way of some examples that are presented only for the sake of illustration, which are not to be construed as limiting the scope of the present invention. It should be noted that in the following Examples, physical properties of the Examples and Comparative Examples were evaluated in the following manners.

### [Inherent viscosities]

A polymer specimen is dissolved in pentafluorophenol at a concentration of 0.1% by mass under a temperature of 60 to 80 °C, and the relative viscosity ($\eta$ rel) is measured by using a Ubbelohde viscometer in a thermostatic chamber at a temperature of 60 °C. Then the inherent viscosity is calculated from the following equation:

$$\eta \text{ inh} = \ln(\eta \text{ rel})/c$$

wherein "c" means concentration (cN/dl) of the polymer.

### [Melting point]

Melting point, Mp, (°C) was determined by observing a temperature at which a largest endothermic peak appears with the use of a differential scanning calorimeter (Mettler DSC).

### [Tenacity, elongation, and initial modulus of filaments]

Tenacity, elongation, and initial modulus of filaments are determined in accordance with Japanese Industrial Standard (JIS) L 1013.

[Planer impact resistance]

In accordance with JIS K 7211 (Plastics-Determination of puncture impact behaviour of rigid plastics), planer impact resistance of the laminated article was determined with Falling Weight type Graphic Impact Tester (produced by and available from Toyo Seiki Seisaku-sho, Ltd.). The measuring condition is as follows: striker diameter of 12.7 mm, holder diameter of 76 mm, falling height of 100 cm, weight of 14.5 kg, and impact velocity of 4.4m /sec. Further, the specimens of laminated articles obtained in Examples and Comparative Examples were visually estimated.

[Peeling strength (cN/25 mm)]

Peeling strength was determined in accordance with JIS K 6848.

(Reference Example 1)

Eight sheets of carbon fiber textiles ("BESFIGHT W-3101" produced by and available from TOHO TENAX Co., Ltd., plain weave textile, fineness of 2,000 dtex, weft density of 12 yarns per 2.5 cm, warp density of 12 yarns per 2.5 cm, basis weight of 200 g/$m^2$, thickness of 0.25 mm) were overlaid, and the overlaid assembly was subjected to an L-RTM method with a vinyl ester polymer (VEP) to produce a laminated plate of vinyl ester polymer (basis weight of 3,000 g/$m^2$, thickness of 2.1 mm). The amount of polymer impregnated in the laminated plate was 47% by weight. The planer impact resistance of the laminated plate is shown in Table 1.

(Example 1)

(1) A wholly aromatic polyester polymer having repeating units (A) and (B) at a molar ratio of 73:27, respectively was employed. The wholly aromatic polyester polymer had $\eta$ inh = 4.6 dl/g, Mp = 280 °C. The wholly aromatic polyester polymer was spun with an ordinal melt-spinning machine to produce a multifilament yarn (1670 dtex/ 300 filaments). The multifilament yarns were subjected to heat treatment under nitrogen atmosphere at 280 °C for 20 hours to produce a wholly aromatic polyester polymer multifilament yarn having a tenacity of 26.3 cN/dtex, an elongation of 4.3%, and an initial modulus of 610 cN/dtex.
(2) With these filament yarns, a plain weave textile (weft density of 12 yarns per 2.5 cm, and warp density of 12 yarns per 2.5 cm) was produced. The textile had a basis weight of 167 g/$m^2$, and a thickness of 0.31 mm.
(3) On the other hand, a thermoplastic elastomer (TE) (tradenamed under "SEPTON 2002" manufactured by and available from Kuraray Co., Ltd.) was melted and kneaded, and subsequently a layer was formed by means of a meltblowing process to provide a nonwoven fabric having a basis weight of 25 g/$m^2$.
(4) The wholly aromatic polyester plain weave textile obtained in the item (2) was placed in alternating with two sheets of thermoplastic elastomer non-woven fabric obtained in the item (3) (i.e., the ratio of plain weave textile /non-woven fabric = 1 sheet / 2 sheets) so that the outermost layer is the non-woven fabric, was overlaid with each other to obtain an overlaid assembly having three sheets of plain weave textile and six sheets of non-woven fabric. This assembly was placed on one surface of the vinyl ester polymer laminated plate obtained in Reference Example 1 and heated under pressure to give a laminated article in which the vinyl ester polymer laminated plate, the plain weave textile, and the non-woven fabric were laminated and unified. The lamination condition was as follows: the assembly was first preheated at 200 °C for three minutes followed by being kept at 200 °C for five minutes under a pressure of 80 kgf/$cm^2$. Thus obtained laminated article had a thickness of 2.7 mm, and a basis weight of 3,651 g/$m^2$. The planer impact resistance of the laminated article was shown in Table 1. In addition, the hard composite material in the laminated article could not be peeled from the soft composite material by hand, and the peeling strength between the hard composite material and the soft composite material was 20.3 N/25 mm.

(Example 2)

Instead of the plain weave textile obtained in the item of (2) in Example 1, a unidirectional fabric was used in this Example. The unidirectional fabric comprised the filaments obtained in the item of (1) in Example 1 as weft yarns. The filaments were supplied in non-twist state under the control of guides so that the unidirectional fabric has a weft density of 12 yarns per 2.5 cm. Thereafter the unidirectional fabric was impregnated with an aqueous emulsion of a thermoplastic elastomer (tradenamed under "SEPTON EMULSION" produced by and available from Kuraray Co., Ltd.), followed by hot air drying (at 120 °C for one minute and at 200 °C for thirty seconds) to produce a prepreg. Three sheets of the prepreg were overlaid and placed on one surface of the vinyl ester polymer laminated plate of Reference Example

1 and heated under pressure to give a laminated article in which the soft composite material and the hard composite material were laminated and unified in the same condition with the item (4) in Example 1. The obtained laminated article had a thickness of 2.6 mm, and a basis weight of 3,633 g/m$^2$. The planer impact resistance of the laminated article was shown in Table 1. In addition, the hard composite material in the laminated article could not be peeled from the soft composite material by hand.

(Comparative Example 1)

Except for using the following plain weave textile instead of the plain weave textile obtained in the item (2) in Example 1, a laminated article was produced in the same way as Example 1. The plain weave textile comprised, as constituent fiber, aramid fibers (tradenamed under "KEVLAR 29" produced by and available from DU PONT-TORAY CO., LTD., 1660 dtex, tenacity of 20.3cN/ dtex, elongation of 3.6%, initial modulus of 406 cN/ dtex), and had a weft density of 13 yarns per 2.5 cm, and a warp density of 13 yarns per 2.5 cm. An overlaid assembly of the plain weave textile and the thermoplastic elastomer non-woven fabric was placed on one surface of the vinyl ester polymer laminated plate and heated under pressure to give a laminated article in which the soft composite material and the hard composite material were laminated and unified. Thus obtained laminated article had a thickness of 2.6 mm, and a basis weight of 3,660 g/m$^2$. The planer impact resistance of the laminated article was shown in Table 1.

(Comparative Example 2)

Except for using the following unidirectional fabric instead of the wholly aromatic polyester unidirectional fabric obtained in Example 2, a laminated article was produced in the same way as Example 2. The unidirectional fabric comprised, as constituent fiber, aramid fibers (tradenamed under "KEVLAR 29" produced by and available from DU PONT-TORAY CO., LTD., 1660 dtex, tenacity of 20.3 cN/ dtex, elongation of 3.6%, initial modulus of 406 cN/ dtex). Thus obtained laminated article had a thickness of 2.6 mm, and a basis weight of 3,645 g/m$^2$. The planer impact resistance of the laminated article was shown in Table 1.

(Example 3)

Except for using an ionomer film (produced by and available from Tamapoly Co., Ltd. basis weight of 40 g/m$^2$, thickness of 0.05 mm) instead of the thermoplastic elastomer non-woven fabric obtained in the item (3) in Example 1, a laminated article was produced in the same way as Example 1. A set of plain weave textile and ionomer film (plain weave textile / ionomer film = 1 sheet/1 sheet) was overlaid with each other to obtain an overlaid assembly of plain weave textile and ionomer film having three sheets of plain weave textiles and three sheets of non-woven fabrics in total. Then, the overlaid assembly was placed on one surface of the vinyl ester polymer laminated plate of Reference Example 1 and heated under pressure to give a laminated article in which the soft composite material and the hard composite material were laminated and unified. Thus obtained laminated article had a thickness of 2.6 mm, and a basis weight of 3,621 g/m$^2$. The planer impact resistance of the laminated article was shown in Table 1. In addition, the hard composite material in the laminated article could not be peeled from the soft composite material by hand.

(Example 4)

Except for using a PET film (tradenamed under "ELPHAN PH" produced by and available from Nihon Matai Co., Ltd., basis weight of 40 g/m$^2$, thickness of 0.05 mm) instead of the ionomer film in Example 3, and except for changing the heating temperature into 290 °C for lamination under pressure, a laminated article was produced in the same way as Example 3. Thus obtained laminated article had a thickness of 2.6 mm, and a basis weight of 3,618 g/m$^2$. The planer impact resistance of the laminated article was shown in Table 1. In addition, the hard composite material in the laminated article could not be peeled from the soft composite material by hand.

(Example 5)

Three sheets of the plain weave textiles obtained in the item (2) in Example 1 were overlaid, and the overlaid assembly was subjected to an L-RTM method in the same way with Reference Example 1 to produce a laminated plate (thickness of 0.6 mm, basis weight of 750 g/m$^2$) in which wholly aromatic polyester textiles were impregnated with vinyl ester polymer. Then, an epoxy series adhesive agent (tradenamed under "ARALDITE" produced by and available from Huntsman Advanced Materials) was applied on one surface of the laminated plate in which the carbon fiber textiles were impregnated with vinyl ester polymer obtained in Reference Example 1. Onto the laminated plate comprising the carbon fiber textiles was placed the vinyl ester polymer laminated plate comprising wholly aromatic polyester textiles to bond

and unified both laminated plates. Thus obtained laminated article had a thickness of 2.6 mm, and a basis weight of 3,780 g/m$^2$. The planer impact resistance of the laminated article was shown in Table 1. In addition, the hard composite material in the laminated article could not be peeled from the soft composite material by hand.

(Comparative Example 3)

Except for using the plain weave textile of the aramid fibers used in Comparative Example 1 instead of the plain weave textile obtained in Example 5, a laminated article was produced in the same way as Example 5. The obtained laminated article had a thickness of 2.6 mm, and a basis weight of 3,625 g/m$^2$. The planer impact resistance of the laminated article was shown in Table 1.

(Example 6)

On one surface of the vinyl ester laminated plate obtained in Reference Example 1, were overlaid three sheets of textile obtained in the item (2) of Example 1. Subsequently, an elastic adhesive agent (tradenamed under "CEMEDINE SUPER X" produced by and available from Cemedine Co., Ltd.) was applied from the top of the sheets to bond and unified the vinyl ester laminated plate and the textiles. Thus obtained laminated article had a thickness of 2.4 mm, and a basis weight of 3,605 g/m$^2$. The planer impact resistance of the laminated article was shown in Table 1. In addition, the hard composite material in the laminated article could not be peeled from the soft composite material by hand, and the peeling strength between the hard composite material and the soft composite material was 54.1 N/25 mm.

(Comparative Example 4)

Except for using a plain weave textile of poly-p-phenylenebenzobisoxazole fiber (PBO fiber) instead of the plain weave textile obtained in Example 5, a laminated article was produced in the same way as Example 5. The obtained laminated article had a thickness of 2.5 mm, and a basis weight of 3,720 g/m$^2$. The planer impact resistance of the laminated article was shown in Table 1.

(Comparative Example 5)

Except for using the plain weave textile of high strength polyethylene fiber instead of the plain weave textile obtained in Example 5, a laminated article was produced in the same way as Example 5. The obtained laminated article had a thickness of 2.5 mm, and a basis weight of 3,422 g/m$^2$. The planer impact resistance of the laminated article was shown in Table 1.

(Comparative Example 6)

Except for using the plain weave textile of carbon fiber used in Reference Example 1 instead of the plain weave textile obtained in Example 5, a laminated article was produced in the same way as Example 5. The obtained laminated article had a thickness of 2.8 mm, and a basis weight of 4,118 g/m$^2$. The planer impact resistance of the laminated article was shown in Table 1.

[Table 1]

| | Hard composite material | | | Soft composite material | | | Laminated article | | Maximum impact strength (N) | Total Absorbed Energy (J) | Puncture of soft composite material | Puncture of hard composite material |
|---|---|---|---|---|---|---|---|---|---|---|---|---|
| | Constituent fiber | Textile system | Polymer | Constituent fiber | Textile system | Polymer | Basis weight ($g/m^2$) | Thickness (mm) | | | | |
| Ex.1 | Carbon | Bi-dir. | VEP | Whole arylate polyester | Bi-dir. | TE | 3651 | 2.7 | 3616 | 86.4 | Deformed | Unchanged |
| Ex. 2 | Carbon | Bi-dir. | VEP | Whole arylate polyester | Uni-dir. | TE | 3633 | 2.6 | 3818 | 94.5 | Deformed | Unchanged |
| Com. Ex. 1 | Carbon | Bi-dir. | VEP | Aramid | Bi-dir. | TE | 3660 | 2.6 | 3234 | 49.8 | Punctured | Burrs occurred |
| Com. Ex. 2 | Carbon | Bi-dir. | VEP | Aramid | Uni-dir. | TE | 3645 | 2.6 | 3263 | 54.6 | Punctured | Burrs occurred |
| EX. 3 | Carbon | Bi-dir. | VEP | Whole arylate polyester | Bi-dir. | Ionomer | 3621 | 2.6 | 3913 | 102.5 | Deformed | Unchanged |
| Ex. 4 | Carbon | Bi-dir. | VEP | Whole arylate polyester | Bi-dir. | PET | 3618 | 2.6 | 3604 | 72.9 | Deformed | Unchanged |
| Ex. 5 | Carbon | Bi-dir. | VEP | Whole arylate polyester | Bi-dir. | VEP | 3780 | 2.6 | 3538 | 69.3 | Deformed | Unchanged |
| Com. Ex. 3 | Carbon | Bi-dir. | VEP | Aramid | Bi-dir. | VEP | 3625 | 2.6 | 3205 | 41.2 | Punctured | Burrs occurred |
| Ex. 6 | Carbon | Bi-dir. | VEP | Whole arylate polyester | Bi-dir. | Elastic adhesive agent | 3605 | 2.4 | 3711 | 90.4 | Deformed | Unchanged |
| Com. Ex. 4 | Carbon | Bi-dir. | VEP | PBO | Bi-dir. | VEP | 3720 | 2.5 | 3313 | 48.8 | Punctured | Burrs occurred |

(continued)

| | Hard composite material | | | Soft composite material | | | Laminated article | | Maximum impact strength (N) | Total Absorbed Energy (J) | Puncture of soft composite material | Puncture of hard composite material |
|---|---|---|---|---|---|---|---|---|---|---|---|---|
| | Constituent fiber | Textile system | Polymer | Constituent fiber | Textile system | Polymer | Basis weight ($g/m^2$) | Thickness (mm) | | | | |
| Com. Ex. 5 | Carbon | Bi-dir. | VEP | High strength PE | Bi-dir. | VEP | 3422 | 2.5 | 3285 | 53.2 | Punctured | Burrs occurred |
| Com. Ex. 6 | Carbon | Bi-dir. | VEP | Carbon | Bi-dir. | VEP | 4118 | 2.8 | 3113 | 39.8 | Punctured | Burrs occurred |

As shown in Table 1, all of the laminated articles in Examples 1 to 6 comprising thermotropic LCP filaments showed high impact resistance in the puncture test, and also showed high values in both maximum impact strength and total absorbed energy. The soft composite materials were not punctured in the puncture test although they were deformed. Further, all of the Examples effectively prevented the hard composite materials from occurring burrs. In addition, the hard composite material in the laminated article could not be peeled from the soft composite material by hand because of high integration of both materials.

In contrast, the laminated articles of Comparative Examples 1 to 3 comprising aramid fibers instead of the thermoplastic LCP fibers in the soft composite material did not show as high impact resistance as the Example articles did in the puncture test, and showed low values in both maximum impact strength and total absorbed energy. Further, the soft composite materials in these Comparative Examples were punctured in the puncture test. Furthermore, burrs were occurred in the hard composite materials in the laminated articles of these Comparative Examples. Also, the laminated articles of Comparative Examples 4 to 6 comprising in the soft composite material, PBO fibers, high strength polyethylene fibers, and carbon fibers, respectively, did not show as high impact resistance as the Example articles did in the puncture test, and showed low values in both maximum impact strength and Total absorbed energy.

INDUSTRIAL APPLICABILITY

According to the present invention, since the laminated articles are excellent in impact resistance, the articles are effectively applicable as impact resistant materials used for impact plates; high speed moving objects such as automotive vehicles, railroad vehicles, and aircrafts; various buildings; and constituent materials as, for example, helmets, bulletproof clothing etc.

As mentioned above, the preferred embodiments of the present invention are illustrated, but it is to be understood that other embodiments may be included, and that various additions, other changes or deletions may be made, without departing from the scope of the present invention.

## Claims

1. An impact-resistant laminated article comprising:

    a layer of a hard composite material, the hard composite material comprising at least a hard reinforcing fiber and a thermosetting polymer used as matrix of the hard composite material; and
    a layer of a soft composite material, the soft composite material comprising at least a soft reinforcing fiber and a thermoplastic polymer used as matrix of the soft composite material, the soft composite layer being laminated to the hard composite layer so as to be bonded with each other;
    wherein the soft reinforcing fiber comprises at least a thermotropic LCP fiber, and the soft composite material comprises a fabric made of the soft reinforcing fiber, and
    the laminated article has a peeling strength measured in accordance with JIS K 6848 for separating the hard composite material from the soft composite material of 10 to 200 N/25 mm.

2. The laminated article as claimed in claim 1, wherein the thermotropic LCP fiber is provided as multifilament yarn.

3. The laminated article as claimed in claim 2, wherein the thermotropic LCP fiber is a multifilament yarn having a single fiber fineness of 1 to 15 dtex and a total fineness of 100 to 3,000 dtex.

4. The laminated article as claimed in any one of claims 1 to 3, wherein the fabric made of the soft reinforcing fiber is a fabric selected from the group consisting of a unidirectional fabric of a thermotropic LCP fiber, a bi-directional fabric thereof, a triaxial fabric thereof, a multiaxial fabric thereof, and a non-crimped fabric.

5. The laminated article as claimed in any one of claims 1 to 4, wherein a sheet of the fabric made of the soft reinforcing fiber has a basis weight of 40 to 300 g/m<2>, and a thickness of 0.05 to 2 mm.

6. An impact-resistant material formed from the laminated article recited in any one of claims 1 to 5.

7. A process for producing an impact-resistant laminated article as claimed in any one of claims 1 to 5, comprising the steps of:

    preparing a fabric, a part or all of which is formed from a soft reinforcing fiber comprising at least a thermotropic

LCP fiber;
forming a soft composite material comprising the fabric made of the soft reinforcing fiber and a thermoplastic polymer by impregnating or soaking the fabric with the polymer or by laminating the fabric with the polymer; and
bonding or laminating the soft composite material with a hard composite material comprising at least a thermosetting polymer and a hard reinforcing fiber to obtain the laminated article.

**8.** The process as claimed in claim 7, wherein the polymer for forming the soft composite material comprises the thermoplastic polymer formed into a sheet or fabric structure.

**9.** The process as claimed in claim 8, wherein the step of forming the soft composite material comprises steps of:

overlaying a fabric made of the soft reinforcing fiber alternating with a sheet or fabric of the thermoplastic polymer to give an overlaid assembly comprising one or more fabric of the soft reinforcing fiber and one or more sheet or fabric of the thermoplastic polymer, in which an outermost layer of the overlaid assembly is thermoplastic polymer sheets or fabrics; and
treating the overlaid assembly by heating under a pressure.

**Patentansprüche**

**1.** Schlagfester laminierter Artikel, der aufweist:

eine Schicht aus einem harten Verbundmaterial, wobei das harte Verbundmaterial mindestens eine harte Verstärkungsfaser und ein duroplastisches Polymer aufweist, das als Matrix des harten Verbundmaterials verwendet wird; und
eine Schicht aus einem weichen Verbundmaterial, wobei das weiche Verbundmaterial mindestens eine weiche Verstärkungsfaser und ein thermoplastisches Polymer aufweist, das als Matrix des weichen Verbundmaterials verwendet wird, und die weiche Verbundschicht auf die harte Verbundschicht so laminiert ist, dass sie miteinander verbunden sind;
wobei die weiche Verstärkungsfaser mindestens eine thermotrope LCP-Faser aufweist und das weiche Verbundmaterial ein Flächengebilde aufweist, das aus der weichen Verstärkungsfaser hergestellt ist, und
der laminierte Artikel eine Schälfestigkeit in der Messung nach JIS K 6848 zum Trennen des harten Verbundmaterials vom weichen Verbundmaterial von 10 bis 200 N/25 mm hat.

**2.** Laminierter Artikel nach Anspruch 1, wobei die thermotrope LCP-Faser als Multifilgarn vorgesehen ist.

**3.** Laminierter Artikel nach Anspruch 2, wobei die thermotrope LCP-Faser ein Multifilgarn mit einer Einzelfaserfeinheit von 1 bis 15 dtex und einer Gesamtfeinheit von 100 bis 3.000 dtex ist.

**4.** Laminierter Artikel nach einem der Ansprüche 1 bis 3, wobei das aus der weichen Verstärkungsfaser hergestellte Flächengebilde ein Flächengebilde ist, das aus der Gruppe ausgewählt ist, die aus einem unidirektionalen Flächengebilde aus einer thermotropen LCP-Faser, einem bidirektionalen Flächengebilde daraus, einem triaxialen Flächengebilde daraus, einem multiaxialen Flächengebilde daraus und einem Non-Crimp-Flächengebilde besteht.

**5.** Laminierter Artikel nach einem der Ansprüche 1 bis 4, wobei eine Bahn des aus der weichen Verstärkungsfaser hergestellten Flächengebildes ein Flächengewicht von 40 bis 300 g/$m^2$ und eine Dicke von 0,05 bis 2 mm hat.

**6.** Schlagfestes Material, das aus dem laminierten Artikel nach einem der Ansprüche 1 bis 5 gebildet ist.

**7.** Verfahren zur Herstellung eines schlagfesten laminierten Artikels nach einem der Ansprüche 1 bis 5, das die Schritte aufweist:

Herstellen eines Flächengebildes, das teilweise oder insgesamt aus einer weichen Verstärkungsfaser gebildet ist, die mindestens eine thermotrope LCP-Faser aufweist;
Bilden eines weichen Verbundmaterials, das das aus der weichen Verstärkungsfaser hergestellte Flächengebilde und ein thermoplastisches Polymer aufweist, durch Imprägnieren oder Tränken des Flächengebildes mit dem Polymer oder durch Laminieren des Flächengebildes mit dem Polymer; und
Verbinden oder Laminieren des weichen Verbundmaterials mit einem harten Verbundmaterial, das mindestens

ein duroplastisches Polymer und eine harte Verstärkungsfaser aufweist, um den laminierten Artikel zu erhalten.

8. Verfahren nach Anspruch 7, wobei das Polymer zum Bilden des weichen Verbundmaterials das thermoplastische Polymer aufweist, das zu einer Bahn- oder Flächengebildestruktur ausgebildet ist.

9. Verfahren nach Anspruch 8, wobei der Schritt des Bildens des weichen Verbundmaterials die Schritte aufweist:

Überlagern eines aus der weichen Verstärkungsfaser hergestellten Flächengebildes abwechselnd mit einer Bahn oder einem Flächengebilde aus dem thermoplastischen Polymer, um eine überlagerte Anordnung zu ergeben, die ein oder mehrere Flächengebilde aus der weichen Verstärkungsfaser und ein(e) oder mehrere Bahnen oder Flächengebilde aus dem thermoplastischen Polymer aufweist, wobei es sich bei einer äußersten Schicht der überlagerten Anordnung um thermoplastische Polymerbahnen oder -flächengebilde handelt; und
Behandeln der überlagerten Anordnung durch Erwärmen unter einem Druck.

## Revendications

1. Article laminé résistant aux chocs comprenant :

une couche d'un matériau composite dur, le matériau composite dur comprenant au moins une fibre de renforcement dure et un polymère thermodurcissable utilisé en tant que matrice du matériau composite dur ; et
une couche d'un matériau composite mou, le matériau composite mou comprenant au moins une fibre de renforcement molle et un polymère thermoplastique utilisé en tant que matrice du matériau composite mou, la couche composite molle étant stratifiée sur la couche composite dure de manière à être fixées l'une à l'autre ;
dans lequel la fibre de renforcement molle comprend au moins une fibre LCP thermotrope, et le matériau composite mou comprend un textile constitué de la fibre de renforcement molle, et
l'article laminé a une résistance au décollement mesurée selon JIS K 6848 pour séparer le matériau composite dur du matériau composite mou de 10 à 200 N/25 mm.

2. Article laminé selon la revendication 1, dans lequel la fibre LCP thermotrope est fournie sous forme de fil multifilament.

3. Article laminé selon la revendication 2, dans lequel la fibre LCP thermotrope est un fil multifilament ayant une finesse de fibre individuelle de 1 à 15 dtex et une finesse totale de 100 à 3 000 dtex.

4. Article laminé selon l'une quelconque des revendications 1 à 3, dans lequel le textile constitué de la fibre de renforcement molle est un textile choisi dans le groupe constitué d'un textile unidirectionnel d'une fibre LCP thermotrope, un textile bidirectionnel de celui-ci, un textile triaxial de celui-ci, un textile multiaxial de celui-ci, et un textile non gaufré.

5. Article laminé selon l'une quelconque des revendications 1 à 4, dans lequel une feuille du textile constitué de la fibre de renforcement molle a une masse surfacique de 40 à 300 $g/m^2$, et une épaisseur de 0,05 à 2 mm.

6. Matériau résistant aux chocs formé de l'article laminé mentionné dans l'une quelconque des revendications 1 à 5.

7. Procédé pour produire un article laminé résistant aux chocs selon l'une quelconque des revendications 1 à 5, comprenant les étapes consistant à :

préparer un textile, dont une partie ou l'intégralité est formée à partir d'une fibre de renforcement molle comprenant au moins une fibre LCP thermotrope ;
former un matériau composite mou comprenant le textile constitué de la fibre de renforcement molle et un polymère thermoplastique par imprégnation ou trempage du textile avec le polymère ou par laminage du textile avec le polymère ; et
fixer ou laminer le matériau composite mou avec un matériau composite dur comprenant au moins un polymère thermodurcissable et une fibre de renforcement dure pour obtenir l'article stratifié.

8. Procédé selon la revendication 7, dans lequel le polymère pour former le matériau composite mou comprend le polymère thermoplastique formé en une structure de feuille ou de textile.

9. Procédé selon la revendication 8, dans lequel l'étape de formation du matériau composite mou comprend les étapes

consistant à :

superposer un textile constitué de la fibre de renforcement molle en alternance avec une feuille ou un textile du polymère thermoplastique pour obtenir un ensemble superposé comprenant un ou plusieurs textiles de la fibre de renforcement molle et une ou plusieurs feuilles ou textiles du polymère thermoplastique, dans lequel une couche externe de l'ensemble superposé est constituée de feuilles ou textiles de polymère thermoplastique et

traiter l'ensemble superposé par chauffage sous une pression.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008249713 A
- WO 9101879 A1
- US 5283114 A
- JP 1031835 A
- JP 2007161907 A
- JP 61279518 A
- JP 2007283758 A